# FASCICULE DE BREVET EUROPEEN

(11) **EP 2 858 282 B1**
(45) Date de publication et mention de la délivrance du brevet: **01.12.2021**
(21) Numéro de dépôt: 14185425.7
(22) Date de dépôt: 18.09.2014
(51) Int. Cl.: H04K 3/00, B61L 15/00, B61L 3/12, H04B 1/04, H04W 84/12

(54) **Dispositif de communication pour un véhicule ferroviaire, véhicule ferroviaire équipé d'un tel dispositif**
Kommunikationsvorrichtung für ein Schienenfahrzeug, und mit dieser Vorrichtung ausgestattetes Schienenfahrzeug
Communication device for a railway vehicle, railway vehicle provided with such a device

(30) Priorité: 19.09.2013 FR 1359029
(43) Date de publication de la demande: 08.04.2015
(73) Titulaire: ALSTOM Transport Technologies, 93400 Saint-Ouen (FR)
(72) Inventeur: Fayt, Etienne André Maurice, 7020 NIMY (BE)
(74) Mandataire: Lavoix

(56) Documents cités:
- DE-A1-102010 027 131
- DE-A1-102011 079 972
- US-A1- 2006 270 470
- None

## Description

La présente invention concerne un dispositif de communication pour un véhicule ferroviaire, du type comprenant un étage de communication sans fil pour communiquer avec une balise de contrôle dans au moins une bande spectrale de communication d'une plage spectrale subdivisée en plusieurs canaux prédéterminés.

L'invention s'applique au domaine de la sécurité ferroviaire et plus particulièrement, mais non exclusivement, à la sécurité des transports métropolitains.

De façon classique, comme décrit dans le document DE 10 2013 027131 A1, les véhicules ferroviaires sont équipés d'un étage de communication pour communiquer avec des balises de contrôle disposées le long de la voie ferrée. De telles balises permettent par exemple un contrôle en temps réel du trafic ferroviaire.

La communication entre les balises et l'étage de communication a généralement pour support des ondes électromagnétiques radiofréquence, par exemple des ondes dont la fréquence se trouve dans la bande 2400 MHz-2489,5 MHz, ou au-delà de 5 GHz. De telles plages de fréquences ne sont généralement pas exclusivement allouées, et sont par exemple librement utilisées par des appareils mobiles grand public, tels que des téléphones portables, des tablettes ou encore des ordinateurs portables.

La présence de tels appareils mobiles en nombre important à bord d'une voiture d'un véhicule ferroviaire, notamment à proximité de l'étage de communication, par exemple durant les heures de pointe, peut perturber, voire interrompre la communication entre l'étage de communication et les balises de contrôle. Les conditions de circulation en sécurité sont telles qu'en cas de rupture de la communication bord-sol, le véhicule ferroviaire doit s'immobiliser. Ainsi, la perturbation par les terminaux des voyageurs de la communication bord-sol a notamment pour effet l'interruption momentanée de la circulation du véhicule ferroviaire, ce qui a pour conséquence de réduire la qualité de service offerte aux usagers.

Il est connu, par exemple par les documents DE 10 2011 079972 A1 ou US 2006/270470 A1, d'interdire toute communication directe entre les téléphones mobiles des passagers et les infrastructures de communication au sol par l'utilisation d'un générateur propre à émettre à l'intérieur de la cabine passagers un bruit sur l'ensemble de la gamme des fréquences susceptible d'être utilisée par les téléphones mobiles.

Un but de l'invention est de proposer un dispositif de communication permettant d'atteindre une meilleure fiabilité et une meilleure disponibilité de la communication bord-sol, sans pour autant empêcher les voyageurs d'utiliser leurs téléphones portables.

A cet effet, l'invention a pour objet un dispositif de communication selon les revendications annexées.

En effet, les appareils tiers, tels que décrits précédemment, ne sont plus en mesure d'occuper les canaux sur lesquels l'étage de protection émet des signaux.

L'invention sera mieux comprise à l'aide de la description qui va suivre, donnée uniquement à titre d'exemple et faite en se référant aux dessins annexés sur lesquels :
- la figure 1 est un schéma d'un véhicule ferroviaire comprenant un dispositif de communication selon un premier mode de réalisation ;
- la figure 2 est un schéma d'un véhicule ferroviaire comprenant un autre dispositif de communication selon un second mode de réalisation ;
- la figure 3 est un spectre représentant schématiquement la puissance rayonnée dans certains canaux d'une plage spectrale, lorsque l'étage de protection du dispositif de communication de la figure 1 ou de la figure 2 est inactif ;
- la figure 4 est un spectre analogue au spectre de la figure 3, donné lorsque l'étage de protection est actif ; et
- la figure 5 est une représentation schématique d'un émetteur d'un dispositif de communication selon l'invention.

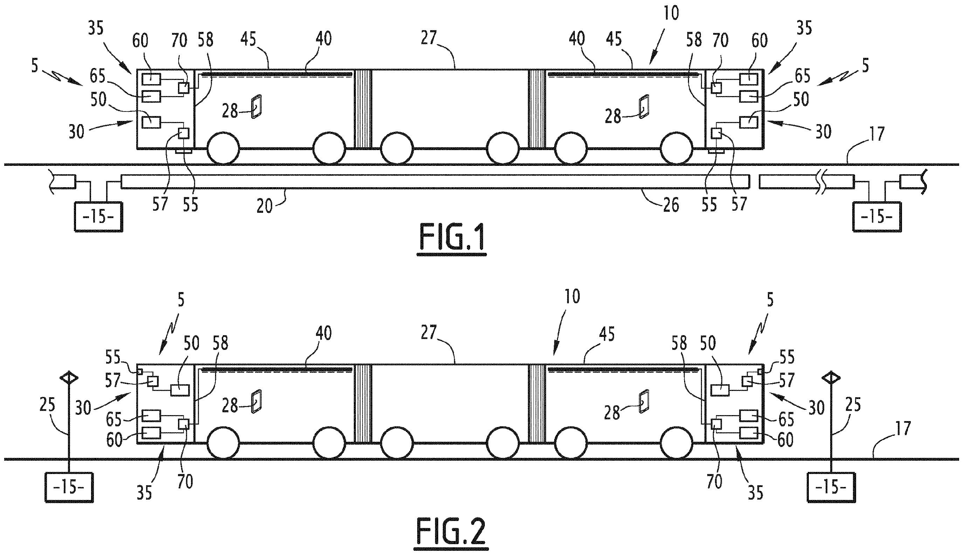

Le dispositif de communication 5 sans fil illustré par la figure 1 est disposé à bord d'un véhicule ferroviaire 10 pour communiquer sans contact avec des balises de contrôle 15 disposées le long d'une voie ferrée 17 de circulation du véhicule ferroviaire 10. La communication entre le dispositif de communication 5 et les balises de contrôle 15 se fait par couplage électromagnétique via un guide d'onde 20, comme cela apparaît sur la figure 1, ou par voie aérienne par le biais d'antennes de balise 25, comme illustré par la figure 2.

Les balises de contrôle 15 définissent des cellules spatiales 26 le long de la voie ferrée 17, chaque cellule 26 étant associée à une fréquence de communication. Les fréquences de communication sont par exemple une fréquence basse F1 et une fréquence haute F2, F2 supérieure à F1, et sont affectées alternativement aux cellules 26 successives le long de la voie ferrée 17.

Les fréquences de communication appartiennent aux spectres définis par la norme IEEE 802.11.

Le véhicule ferroviaire 10 comporte des voitures 27 pour accueillir des passagers, notamment des passagers transportant des appareils mobiles de communication 28.

Le dispositif de communication 5 comporte un étage de communication 30, un étage de protection 35 et une antenne de protection 40.

L'antenne de protection 40 est disposée dans une voiture 27 du véhicule ferroviaire 10, en particulier dans une voiture d'extrémité 45. Avantageusement, l'étage de communication 30 est disposé dans la même voiture 27 que l'antenne de protection 40. De préférence, seules les voitures 27 du véhicule ferroviaire 10 comprenant un étage de communication 30 sont équipées de l'antenne de protection 40.

L'antenne de protection 40 est par exemple un câble coaxial dont le blindage a été altéré pour permettre au câble de rayonner une partie des signaux électriques qui le traversent.

L'étage de communication 30 comporte un module d'émission-réception 50 et une antenne de communication 55. L'étage de communication comporte en outre des moyens de filtrage 57 et des moyens d'écrantage 58.

Le module d'émission-réception 50 est propre à communiquer avec les balises de contrôle 15 via l'antenne de communication 55, par couplage électromagnétique entre l'antenne de communication 55 et le guide d'onde 20, comme illustré par la figure 1, ou par propagation libre entre l'antenne de communication 55 et les antennes de balise 25, comme illustré par la figure 2.

Les moyens de filtrage 57 sont propres à effectuer un filtrage spectral d'un signal provenant de l'antenne de communication 55.

Les moyens d'écrantage 58 sont par exemple un caisson pour isoler électriquement l'étage de communication 30 de l'antenne de protection 40, tout en permettant la communication entre l'étage de communication 30 et les balises de contrôle 15.

L'étage de protection 35 comporte un premier émetteur 60 pour générer des signaux dans une première bande spectrale B1, et un deuxième émetteur 65 pour générer des signaux dans une deuxième bande spectrale B2. L'étage de protection 35 comporte en outre un coupleur 70.

Les signaux générés par le premier et le deuxième émetteur 60, 65 sont de préférence des trames au niveau de la couche 2 du modèle OSI, tels que décrites dans la norme IEEE 802.11. Les trames sont composées d'un entête, d'une charge utile et terminés par un code CRC (« Cyclic Redundancy Check ») qui est utilisé par le récepteur pour vérifier si une trame a été correctement reçue. Les trames sont générées par les émetteurs 60 et 65 en séquence sans interruption au cours du temps.

Le premier émetteur 60 et le deuxième émetteur 65 sont reliés à des entrées du coupleur 70.

L'antenne de protection 40 est électriquement reliée à une sortie du coupleur 70 pour rayonner une combinaison des signaux appliqués par le premier émetteur 60 et le deuxième émetteur 65 en entrée du coupleur 70.

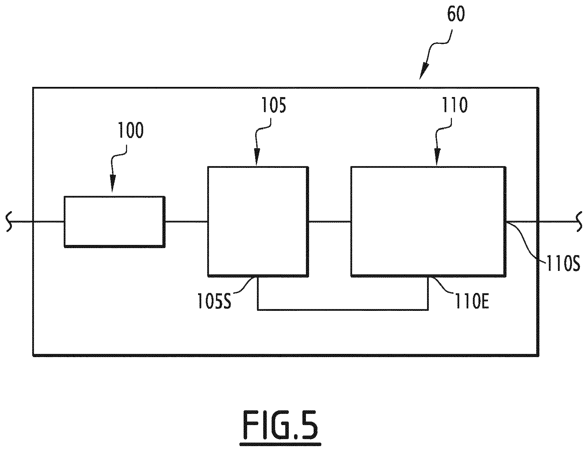

Par exemple, comme illustré par la figure 5, le premier et le deuxième émetteurs 60, 65 comportent une interface Ethernet 100, une unité de traitement en bande de base 105 et un module radiofréquence 110 reliés en série.

L'interface Ethernet 100 est propre à recevoir des informations relatives à la configuration des émetteurs 60, 65, par exemple des informations provenant d'un système au sol de gestion du trafic ferroviaire ou d'un ordinateur embarqué à bord du véhicule ferroviaire 10. De telles informations sont par exemple la valeur de la fréquence basse F1, la valeur de la fréquence haute F2, la puissance des signaux à générer ou encore la longueur des trames à générer.

L'unité de traitement en bande de base 105 est propre à fournir un signal comportant des trames en bande de base. Plus particulièrement, l'unité de traitement en bande de base 105 est propre à fournir un signal comportant des trames en bande de base dont les caractéristiques sont fonction des informations de configuration reçues par l'interface Ethernet 100.

Le module radiofréquence 110 est propre à transposer en fréquence le signal fourni par l'unité de traitement en bande de base 105 pour générer un signal radiofréquence de fréquence F1, F2 correspondant à l'émetteur 60, 65 et qui comporte lesdites trames.

Une sortie 110S du module radiofréquence 110 est reliée à l'antenne de protection 45 pour appliquer à ladite antenne de protection 45 ledit signal radiofréquence.

Avantageusement, l'unité de traitement en bande de base 105 est également propre à recevoir, en provenance de l'interface Ethernet 100, les informations relatives à la valeur des fréquences F1, F2. Comme illustré par la figure 5, l'unité de traitement en bande de base 105 comporte alors une sortie 105S reliée à une entrée 110E du module radiofréquence 110 pour commander la fréquence de transposition du signal fourni par l'unité de traitement en bande de base 105, ladite fréquence de transposition étant égale à la fréquence F1, F2.

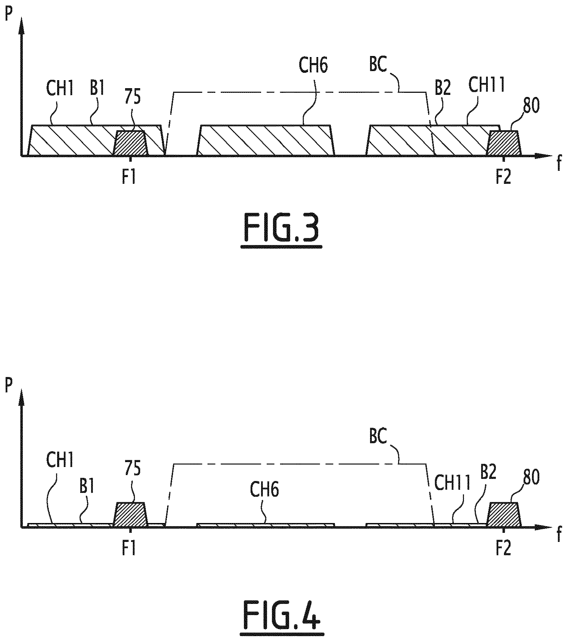

Le dispositif de communication 5 dont le fonctionnement est illustré par les figures 3 et 4 opère dans la plage 2400 MHz-2489,5 MHz. Cette plage est subdivisée en une pluralité de canaux prédéterminés conformément à la norme IEEE 802.11. Selon la norme IEEE 802.11, les canaux de la bande 2400 MHz-2489,5 MHz ont une largeur de 20 MHz.

L'étage de communication 30 est propre à émettre et recevoir des signaux dans une bande spectrale de communication basse 75 et dans une bande spectrale de communication haute 80, centrées respectivement sur la fréquence basse F1 = 2417 MHz, et sur la fréquence haute F2 = 2472 MHz. Chaque bande spectrale 75, 80 a une largeur de 5 MHz.

La fréquence basse F1 correspond ici à la fréquence centrale du canal « 2 » de la bande 2400 MHz-2489,5 MHz selon la norme IEEE 802.11.

La fréquence haute F2 correspond ici à la fréquence centrale du canal « 13 » de la bande 2400 MHz-2489,5 MHz, selon la norme IEEE 802.11.

Avantageusement, les bandes spectrales 75, 80 sont choisies de sorte que les canaux correspondants n'interfèrent pas avec au moins un autre canal de la plage spectrale multicanaux.

Généralement, les appareils mobiles 28 émettent dans le canal « 1 », le canal « 6 » et le canal « 11 » de la bande 2400 MHz-2489,5 MHz, selon la norme IEEE 802.11, désignés respectivement par les références CH1, CH6 et CH11 sur ces figures.

Ainsi, le canal « 1 » recouvre la bande spectrale de communication basse 75 et le canal « 11 » recouvre la bande spectrale de communication haute 80.

La première bande spectrale B1 du premier émetteur 60 de l'étage de protection 35 est le canal « 1 » CH1 selon la norme IEEE 802.11.

La deuxième bande spectrale B2 du deuxième émetteur 65 de l'étage de protection 35 est le canal « 11 » CH11 selon la norme IEEE 802.11.

Les moyens de filtrage 57 sont par exemple un filtre linéaire coupe-bande dont la bande de coupure s'étend de 2422 MHz à 2462 MHz, et est désignée par la référence BC sur ces mêmes figures.

En fonctionnement, durant la progression du véhicule ferroviaire 10 sur la voie ferrée 17, l'étage de communication 30 communique avec les balises de contrôle 15 successives, alternativement à la fréquence F1 et à la fréquence F2, en raison du passage successif du dispositif de communication 5 d'une cellule 26 à la cellule 26 suivante.

Les moyens de protection, constitués par l'étage de protection 35 et l'antenne de protection 40, émettent en continu (c'est-à-dire avec une fréquence de répétition élevée et sans délai de transmission entre paquet de manière à occuper continument un canal au cours du temps) des trames dans le canal « 1 » CH1 et le canal « 11 » CH11 pour encombrer ces canaux.

L'antenne 40 est de préférence propre à rayonner des signaux en direction principalement des voitures d'extrémité 45 du véhicule ferroviaire, situées au voisinage du point d'implantation de l'antenne 40 à bord du véhicule ferroviaire 10.

En conséquence, pour communiquer, les appareils mobiles 28 situés dans les voitures d'extrémité 45 ne peuvent plus utiliser ni le canal « 1 » CH1, ni le canal « 11 » CH11. Ils ne peuvent qu'utiliser un autre canal, par exemple le canal « 6 » CH6.

Les moyens de filtrage 57 filtrent les signaux émis par les appareils mobiles de communication 28 dans le canal « 6 » CH6.

En outre, les moyens d'écrantage 58 atténuent les signaux parvenant à l'étage de communication 30 après avoir été émis par l'étage de protection 35 et rayonné par l'antenne de protection 40.

Par conséquent, la puissance des signaux provenant des balises de contrôle 15 et reçus par l'étage de communication 30 dans chacune des bandes de communication basse 75 et haute 80 est prédominante devant la puissance des signaux émis soit par les appareils mobiles de communication 28 dans le canal « 6 » CH6, soit par le premier émetteur 60 dans le canal « 1 » CH1, soit par le deuxième émetteur 65 dans le canal « 11 » CH11.

## Revendications

1. Dispositif de communication (5) pour un véhicule ferroviaire (10), du type comprenant un étage de communication (30) sans fil pour la communication bord-sol avec une balise de contrôle (15), disposée le long de la voie ferrée,
la balise de contrôle définissant une cellule spatiale le long de la voie ferrée, cellule spatiale à laquelle est associée une fréquence de communication, la fréquence de communication correspondant à la fréquence centrale d'un canal d'une plage entre 2400 MHz et 2489,5 MHz, subdivisée en plusieurs canaux (CH1, CH6, CH11), selon la norme IEEE 802.11,
l'étage de communication étant propre à émettre et à recevoir des signaux dans une bande spectrale de communication (75, 80) centrée sur la fréquence de communication de la balise de contrôle,
ledit dispositif de communication (5) étant **caractérisé en ce qu'**il comporte en outre un étage de protection (35) relié à une antenne de protection (40), l'étage de protection (35) étant propre à générer des signaux dans un canal (CH1, CH11) qui recouvre la bande spectrale de communication (75, 80), et l'antenne de protection (40) étant propre à rayonner les signaux générés en direction d'une voiture (27, 45) dudit véhicule ferroviaire (10),
de sorte que, pour communiquer, un appareil mobile (28) situé dans la voiture ne peut plus utiliser le canal qui recouvre la bande spectrale de communication, mais uniquement un autre canal de la plage.

2. Dispositif (5) selon la revendication 1, **caractérisé en ce que** l'étage de protection (35) est propre à émettre des signaux en continu au cours du temps dans le ou chaque canal (CH1, CH11) prédéterminé.

3. Dispositif (5) selon l'une quelconque des revendications précédentes, **caractérisé en ce que** la ou chaque bande de communication (75, 80) est plus étroite qu'un canal (CH1, CH6, CH11) prédéterminé de la plage multicanaux.

4. Dispositif (5) selon l'une quelconque des revendications précédentes, **caractérisé en ce que** l'étage de communication (30) comporte des moyens d'écrantage (58) propres à atténuer les signaux rayonnés par l'antenne de protection (40).

5. Dispositif (5) selon l'une quelconque des revendications précédentes, **caractérisé en ce que** l'étage de communication (30) comporte des moyens de filtrage (57) propres à atténuer des signaux dont la fréquence appartient à des canaux (CH6) prédéterminés qui ne recouvrent pas la ou chaque bande de communication (75, 80).

6. Véhicule ferroviaire (10), **caractérisé en ce qu'**il comprend un dispositif de communication (5) selon l'une quelconque des revendications 1 à 5.

7. Véhicule ferroviaire (10) selon la revendication 6, **caractérisé en ce que** l'antenne de protection (40) est propre à rayonner en direction d'au moins une des voitures (45) du véhicule ferroviaire (10) qui sont situées au voisinage de l'implantation de l'étage de communication (30) du dispositif de communication (5) à bord du véhicule ferroviaire.

## Patentansprüche

1. - Kommunikationsvorrichtung (5) für ein Schienenfahrzeug (10), derart, umfassend eine drahtlose Kommunikationsstufe (30) für die Kommunikation an Bord-Boden mit einer Kontrollbake (15), die entlang der Bahnstrecke angeordnet ist,
wobei die Steuerbake eine Raumzelle entlang der Bahnstrecke definiert, wobei die Raumzelle mit einer Kommunikationsfrequenz assoziiert ist, wobei die Kommunikationsfrequenz der Mittenfrequenz eines Kanals in einem Bereich zwischen 2400 MHz und 2489,5 MHz entspricht, der in mehrere Kanäle (CH1, CH6, CH11) gemäß der Norm IEEE 802.11 unterteilt ist,
wobei die Kommunikationsstufe geeignet ist, um Signale in einem Kommunikationsspektralband (75, 80) zu senden und zu empfangen, das auf die Kommunikationsfrequenz der Kontrollbake zentriert ist,
wobei die Kommunikationsvorrichtung (5) **dadurch gekennzeichnet ist, dass** sie ferner eine Schutzstufe (35) umfasst, die mit einer Schutzantenne (40) verbunden ist, wobei die Schutzstufe (35) so geeignet ist, um Signale in einem J Z-Kanal (CH1, CH11) zu erzeugen, der das Kommunikationsspektralband (75, 80) abdeckt, und die Schutzantenne (40) geeignet ist, um die erzeugten Signale in Richtung eines Wagens (27, 45) des Schienenfahrzeugs (10) abzustrahlen,
derart, dass ein mobiles Gerät (28), das sich in dem Fahrzeug befindet, den Kanal, der das Kommunikationsspektrumband abdeckt, nicht mehr zur Kommunikation nutzen kann, sondern nur noch einen anderen Kanal in diesem Bereich.

2. - Vorrichtung (5) nach Anspruch 1, **dadurch gekennzeichnet, dass** die Schutzstufe (35) dazu geeignet ist, um in dem oder jedem vorbestimmten Kanal (CH1, CH11) kontinuierlich Signale über die Zeit zu übertragen.

3. - Vorrichtung (5) nach einem der vorherigen Ansprüche, **dadurch gekennzeichnet, dass** das oder jedes Kommunikationsband (75, 80) schmaler ist als ein vorbestimmter Kanal (CH1, CH6, CH11) des Mehrkanalbereichs.

4. - Vorrichtung (5) nach einem der vorherigen Ansprüche, **dadurch gekennzeichnet, dass** die Kommunikationsstufe (30) Abschirmungseinrichtungen (58) umfasst, die geeignet sind, um die von der Schutzantenne (40) abgestrahlten Signale abzuschwächen.

5. - Vorrichtung (5) nach einem der vorherigen Ansprüche, **dadurch gekennzeichnet, dass** die Kommunikationsstufe (30) Filtereinrichtungen umfasst, die geeignet sind, um Signale abzuschwächen, deren Frequenz zu vorbestimmten Kanälen (CH6) gehört, die das oder jedes Kommunikationsband (75, 80) nicht abdecken.

6. - Schienenfahrzeug (10), das **dadurch gekennzeichnet ist, dass** es eine Kommunikationsvorrichtung (5) nach einem der Ansprüche 1 bis 5 umfasst.

7. - Schienenfahrzeug (10) nach Anspruch 6, **dadurch gekennzeichnet, dass** die Schutzantenne (40) geeignet ist, um in Richtung mindestens eines der Wagen (45) des Schienenfahrzeugs (10) zu strahlen, die sich in der Nähe der Installation der Kommunikationsstufe (30) der Kommunikationsvorrichtung (5) an Bord des Schienenfahrzeugs befinden.

## Claims

1. A communication device (5) for rail vehicle (10), of the type comprising a wireless communication stage (30) for the onboard/ground communication with a control beacon (15), arranged along the rail track,
the control beacon defining a space cell along the rail track, to which space cell a communication frequency is associated, the communication frequency corresponding to the central frequency of a channel in a range between 2400 MHz and 2489.5 MHz, which is subdivided into several channels (CH1, CH6, CH11), according to standard IEEE 802.1,
the communication stage being adapted to transmit and receive signals in a communication spectral band (75, 80) centred on the communication frequency of the control beacon,
said communication device (5) being **characterized in that** it further comprises a protection stage (35) linked to a protection antenna (40), the protection stage (35) being able to generate signals in one channel (CH1, CH11) which covers the communication spectral band (75, 80), and the protection antenna (40) being capable of radiating the generated signals in the direction of a coach (27, 45) of said rail vehicle (10),
so that, for communication, a mobile device (28) in the coach can no longer use the channel that covers the communication spectrum band, but only another channel in the range.

2. The device (5) according to claim 1, **characterized in that** the protection stage (35) is capable of transmitting signals continuously over time on the or on each predetermined channel (CH1, CH11).

3. The device (5) according to any of the preceding claims, **characterized in that** the or each communication band (75, 80) is narrower than a predetermined channel (CH1, CH6, CH11) of the multi-channel spectral range.

4. The device (5) according to any of the preceding claims, **characterized in that** the communication stage (30) comprises screening means (58) capable of attenuating the signals radiated by the protection antenna (40).

5. The device (5) according to any of the preceding claims, **characterized in that** the communication stage (30) comprises filtering means (57) capable of attenuating signals whose frequency belongs to predetermined channels (CH6) which do not cover the or each communication band (75, 80).

6. A rail vehicle (10), **characterized in that** it comprises a communication device (5) according to any of claims 1 to 5.

7. The rail vehicle (10) according to claim 6, **characterized in that** the protection antenna (40) is capable of radiating in the direction of at least one of the coaches (45) of the rail vehicle (10) which are located in the vicinity of the installation point of the communication stage (30) of the communication device (5) on board the rail vehicle.
